# EUROPEAN PATENT APPLICATION

(11) **EP 4 289 997 A1**
(43) Date of publication of application: **13.12.2023**
(21) Application number: 22893973.2
(22) Date of filing: 05.07.2022
(51) Int. Cl.: D01D 4/00, D01D 5/06

(54) **PREPARATION METHOD FOR ULTRA-HIGH MOLECULAR WEIGHT POLYETHYLENE FIBER, SPINNERET PLATE ASSEMBLY, AND MULTI-FILAMENT YARN**

(30) Priority: 23.04.2022 CN 202210431740
(71) Applicant: Zhejiang Aegis New Materials Co., Ltd., Shaoxing, Zhejiang 312000 (CN)
(72) Inventor: The designation of the inventor has not yet been filed
(74) Representative: Dr. Gassner & Partner mbB
(86) International application number: PCT/CN2022/103785
(87) International publication number: WO 2023/201899

(57) **Abstract**

The present application relates to the technical field of fiber spinning molding, and particularly to a preparation method of an ultra-high molecular weight polyethylene fiber, a spinneret assembly and a multifilament yarn. The spinneret assembly includes a housing, a plate body and a extrusion hole provided in the plate body. The extrusion hole includes a pressurized inlet segment and an outlet segment connected to an end of the pressurized inlet segment. An inner diameter of the pressurized inlet segment is gradually decreased from one end away from the outlet segment to the other end, and the inner diameter of the outlet segment is constant. The present application has the following effects: sufficient melts enter the pressurized inlet segment. Since the melt has a sufficient feeding pressure, the pressure is gradually increased with the reduced diameter of the pressurized inlet segment, so as to ensure as much as possible a sufficient melt entering the outlet segment. In addition, the melt remains to be fully filled in the extrusion hole under the pressurized situation, improving the extrusion homogeneity of the chemical fibers.

## Description

### TECHNICAL FIELD

The present application relates to the technical field of fiber spinning molding, and particularly to a preparation method of an ultra-high molecular weight polyethylene fiber, a spinneret assembly and a multifilament yarn.

### BACKGROUND ART

During a preparation process of a polyethylene fiber, raw materials are required to be mixed in a certain ratio, and are melted by a high temperature screw extruder, so that a polymer melt is pressurized and enters an extrusion assembly. The extrusion assembly generally includes a housing and a spinneret positioned in the housing, in which the spinneret is provided with an extrusion hole. The melt is pressurized and introduced in the extrusion hole, the chemical fibers are extruded from the extrusion hole, then a cooling operation is performed on the chemical fiber and finally the fiber is formed.

During an extrusion process, the melt enters the extrusion hole. Due to a possibility that the extruded melt cannot simultaneously enter the extrusion holes during an extrusion process, a situation arises that a fiber body is inhomogeneous during the extrusion process of the spinning molding, thereby affecting a molding quality.

### SUMMARY

In order to improve the extrusion homogeneity of chemical fibers, the present application provides a spinneret assembly, a preparation method of an ultra-high molecular weight polyethylene fiber and a multifilament yarn.

In a first aspect, the present application is provided with a spinneret assembly by adopting the following technical solution: the spinneret assembly includes a housing, a plate body and an extrusion hole provided in the plate body. The extrusion hole includes a pressurized inlet segment and an outlet segment connected to an end of the pressurized inlet segment. An inner diameter of the pressurized inlet segment is gradually decrease from one end away from the outlet segment to the other end thereof, and the inner diameter of the outlet segment is constant.

By adopting the above technical solution, the melt firstly enters an end of the pressurized inlet segment with a larger diameter when feeding. The sufficient melts enter the pressurized inlet segment. Since the melt has a sufficient feeding pressure, the pressure is gradually increased with the reduced diameter of the pressurized inlet segment, so as to ensure as much as possible a sufficient melt entering the outlet segment. In addition, the melt remains to be fully filled in the extrusion hole under the pressurized situation, improving the extrusion homogeneity of the chemical fibers.

Preferably, the pressurized inlet segment is configured as an inverted cone shape.

By adopting the above technical solution, the melt will enter the outlet segment in a linearly increased pressurization manner, in which the pressure is increased homogeneously, so as to realize a relatively homogeneous extrusion.

Preferably, the housing is provided with a distribution block, the distribution block is provided with a distribution cavity corresponding to the extrusion hole, a filter plate positioned above of the extrusion hole is provided in the distribution cavity, and the filter plate is slidable along a direction perpendicular to a central axis of the housing for replacement.

By adopting the above technical solution, the melt can be homogeneously distributed on the filter plate by the distribution block for filtering, so as to block most of the impurities. When excessive impurities are accumulated on the filter plate, the filter plate can be slid to be replaced.

Preferably, the housing has a sliding replacement channel along a radial direction, the sliding replacement channel is provided with a plurality of filter plates, the adjacent filter plates are connected to each other by a connector. The sliding replacement channel includes a working segment passing through the housing, a reserve segment provided on one end of the working segment, a disusing segment provided on the other end of the working segment, and an end of the disusing segment away from the working segment is provided with an outlet port.

By adopting the above technical solution, the filter plates for replacement can be stored in the reserve segment. When it is required to replace the filter plate, the filter plate can be slid along the sliding replacement channel, so that the filter plate in the working segment can enter the disusing segment, while the filter plate in the reserve segment enters the working segment for replacement.

Preferably, the connector includes a connecting rod, and an elastic plate that provided on each end of the connecting rod and embedded in the filter plate. Each end of the filter plate is provided with a connecting groove for accommodating the elastic plate. The elastic plate has a V-shape. Two deformed ends of the elastic plate face towards a direction perpendicular to a motion direction of the filter plate. The housing positioned between the working segment and the disusing segment is provided with an accommodation groove for accommodating the connector, and the housing is provided with a knocking member for knocking the connector into the accommodation groove.

By adopting the above technical solution, when connecting, the two elastic plates are respectively embedded in the adjacent filter plates. When embedding, the elastic plates may extend outwardly and abut against an inner wall of the connecting groove, so that the elastic plate keeps still in the vertical direction under an abutting force. However, when one of the filter plates is slid, a linkage is performed via the connector. When the connector is moved above the accommodation groove, the knocking member will knock the connector from above, so that the connector is detached from the connecting groove and enters the accommodation groove, and the two filter plates will be detached from each other at the same time, facilitating the replacement.

Preferably, the knocking member includes a knocking stick slidably connected to the housing along the central axis direction and an elastic strip provided in the housing and connected to the knocking stick; a linkage wheel for intermittently driving the knocking stick away from the accommodation groove is provided in the housing.

By adopting the above technical solution, when the linkage wheel is rotated, the knocking stick is moved away from a side of the accommodation groove, and the elastic strip will be stretched and deformed at the same time. When the linkage wheel is detached from the knocking stick, the elastic strip will drive the knocking stick to move towards the side of the accommodation groove. The knocking stick will knock the connecting rod due to inertia, so that the connector is detached from the accommodation groove.

In a second aspect, the present application provides a preparation method of an ultra-high molecular weight polyethylene fiber by adopting the following technical solution.

A preparation method of an ultra-high molecular weight polyethylene fiber includes the following process steps:
step S1, preparing a spinning solution, in which the spinning solution includes raw materials with the following parts by weight:
85-95 parts of an ultra-high molecular weight polyethylene powder, 1.7-9.5 parts of nano boron nitride, 9.5-35 parts of 35-40 wt% hydrogen fluoride solution, 5-15 parts of a solvent and 1-2.5 parts of tannic acid;
step S2, spinning, in which the spinning solution obtained in step S1 is spun by adopting the above spinneret assembly to obtain a fluid filament;
step S3, cooling, in which the fluid filament obtained in step S2 is cooled to obtain a gel filament; and
step S4, extracting, in which the gel filament obtained in step S3 is extracted to obtain the ultra-high molecular weight polyethylene fiber.

By adopting the above technical solution, a relatively homogeneous fiber body can be obtained by using this kind of spinneret assembly, so as to obtain the ultra-high molecular weight polyethylene fiber with a better quality. In the present application, the ultra-high molecular weight polyethylene powder can be modified by adding the nano boron nitride, so as to improve the strength of the ultra-high molecular weight polyethylene fiber. In this technical solution, the nano boron nitride is dissolved by the hydrogen fluoride solution at first, so that the nano boron nitride and the ultra-high molecular weight polyethylene powder can be mixed homogeneously. Further, the hydrogen fluoride solution is an acidic solution, which can change the surface properties of the ultra-high molecular weight polyethylene powder, so as to improve the combination stability between the ultra-high molecular weight polyethylene powder and the nano boron nitride. The tannic acid is a polyphenol substance, and the tannic acid molecule has abundant phenolic hydroxyl reactive groups that have a good adhesion performance to different substances. The introduction of the tannic acid can improve the combination stability between the nano boron nitride and the ultra-high molecular weight polyethylene powder, further to ensure a homogeneous dispersion of the nano boron nitride and the ultra-high molecular weight polyethylene powder. Therefore, in the above technical solution, the ultra-high molecular weight polyethylene powder is modified by the nano boron nitride, which is intended to improve the strength of the prepared the ultra-high molecular weight polyethylene fiber, in which the hydrogen fluoride and the solvent are selected, so that the nano boron nitride and the ultra-high molecular weight polyethylene powder can be mixed in a liquid state, improving a mixing homogeneity. Meanwhile, a combined use of the hydrogen fluoride and the tannic acid can further improve the combination stability between the nano boron nitride and the ultra-high molecular weight polyethylene powder, so as to ensure an excellent strength of the obtained ultra-high molecular weight polyethylene fiber. In addition, an introducing amount of the nano boron nitride is not recommended to be too high. An excessive introducing amount may cause an adverse effect on the elastic modulus of the ultra-high molecular weight polyethylene fiber.

In particular, the ultra-high molecular weight polyethylene (abbreviated as UHMWPE) is an unbranched linear polyethylene with a relative molecular weight greater than or equal to 15000000 g/mol, which is commercially available or synthesized.

The nano boron nitride has a particle size of 10-100 nm.

Preferably, the spinning solution is prepared by adopting a method including the following steps:
I. mixing the ultra-high molecular weight polyethylene powder and the solvent to obtain a polyethylene mixed solution; and mixing the nano boron nitride and 35-40 wt% hydrogen fluoride solution to obtain a nano boron nitride mixed solution; and
II. mixing the tannic acid, the polyethylene mixed solution and the nano boron nitride mixed solution to obtain the spinning solution.

Preferably, when spinning in step S2, a spinning temperature is 200-300 °C, and the fluid filament is placed in an environment of 200-300 °C for 5-15 min.

Preferably, in step S3, when cooling, a cooling temperature is 5-15 °C.

Preferably, the solvent is one or more selected from halogenated hydrocarbon, mineral oil, liquid paraffin, decahydronaphthalene, tetrahydronaphthalenes, naphthalene, dimethylbenzene, toluene, dodecane, undecane, decane, n-nonane, octene, cis-decahydronaphthalene, trans-decahydronaphthalene and low molecular weight polyethylene wax.

Preferably, when extracting in step S3, an extractant is one or two selected from dimethylbenzene and gasoline.

Preferably, the spinning solution in step S 1 has an intrinsic viscosity of at least 4 dL/g.

Preferably, the ultra-high molecular weight polyethylene fiber obtained in step S4 has a tensile strength greater than or equal to 3.0 GPa, and a tensile modulus greater than or equal to 100.0 GPa.

In a third aspect, the present application provides a multifilament yarn by adopting the following technical solution.

A multifilament yarn is made of the ultra-high molecular weight polyethylene fiber prepared by the above preparation method.

In summary, the present application has at least one of the following beneficial technical effects.
1. When entering into the extrusion hole, the melt is pressurized through the reduced diameter in the pressurized inlet segment, so as to fully fill the extrusion hole, improving an overall spinning quality.
2. Before entering the extrusion hole, the melt is filtered through the filter plate, thereby reducing a possibility that the extrusion hole is blocked by impurities in the melt.
3. After a long time of spinning, the filter plate with relatively more impurities is replaced in a sliding way, thereby ensuring a better filtering effect.
4. When preparing the ultra-high molecular weight polyethylene fiber in the present application, a modification of the ultra-high molecular weight polyethylene power by nano boron nitride can improve the strength of the ultra-high molecular weight polyethylene fiber, in which the hydrogen fluoride solution serves as the solvent to dissolve the nano boron nitride in one aspect, and serves as a modifier for changing the surface properties of the ultra-high molecular weight polyethylene power in the other aspect, so that the nano boron nitride and the ultra-high molecular weight polyethylene power can be better mixed and interacted with each other. In particular, the combined use of the tannic acid and the hydrogen fluoride can improve the combination stability between the nano boron nitride and the ultra-high molecular weight polyethylene powder, further to ensure a homogeneous dispersion of the nano boron nitride and the ultra-high molecular weight polyethylene powder, so that the obtained ultra-high molecular weight polyethylene fiber has excellent strength and elastic modulus.

### BRIEF DESCRIPTION OF THE DRAWINGS

FIG. 1 is a structural schematic diagram of a spinneret assembly.
FIG.2 is a section view of a spinneret assembly.
FIG.3 is a section view of a spinneret.
FIG.4 is a partial section view of a spinneret assembly.
FIG.5 is a partial schematic diagram by hiding a sliding replacement channel and a housing.
FIG.6 is an enlarged schematic diagram of portion A in FIG. 5.
FIG.7 is a structural schematic diagram of a filter plate.

### DETAILED DESCRIPTION

The present application is further described in detail below in combination with the drawings.

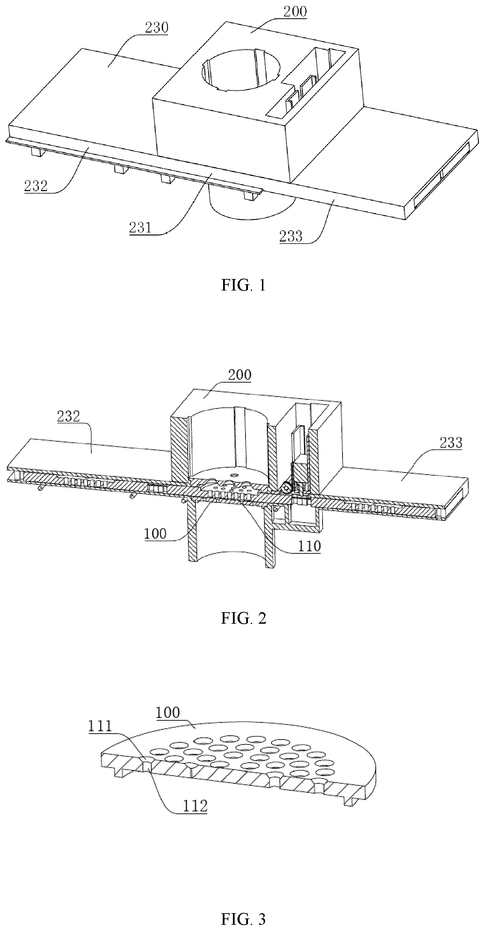

An embodiment of the present application discloses a spinneret assembly. Referring to FIGs.1-3, the spinneret assembly includes a housing 200, a plate body 100 and an extrusion hole 110 provided in the plate body 100. The extrusion hole 100 includes a pressurized inlet segment 111 and an outlet segment 112 connected to an end of the pressurized inlet segment 111. An inner diameter of the pressurized inlet segment 111 is gradually decreased from one end away from the outlet segment 112 to the other end thereof. In this embodiment, the pressurized inlet segment 111 has an inverted cone shape, the larger end is configured to receive the incoming material, and the smaller end is configured to connect to the outlet segment 112. The inner diameter of the outlet segment 112 is constant.

The melt will enter the pressurized inlet segment 111 from the larger end. The melt is pressurized by the reduced diameter when moving along the pressurized inlet segment 111, so that the melt can be better extruded into the extrusion hole 110, realizing the extrusion. In this embodiment, an included angle between a generatrix and an axis of the pressurized inlet segment 111 is 35-45 °.

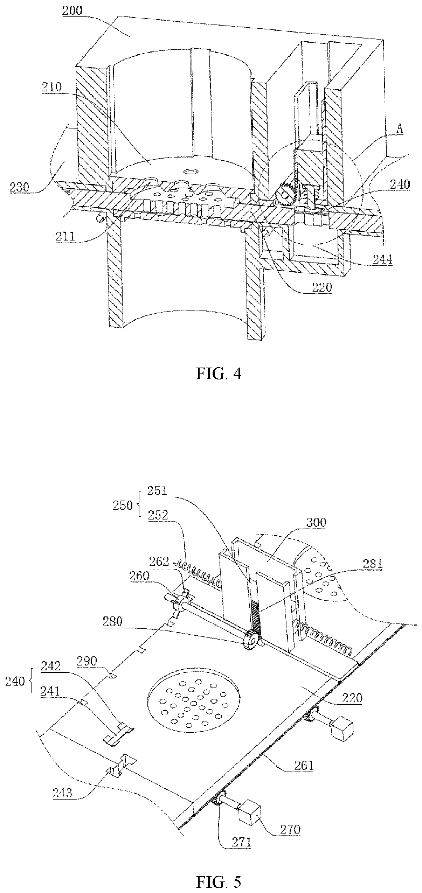

Referring to FIG.4, a distribution block 210 is fixed in the housing 200 by a bolt, and the distribution block 210 is provided with a distribution cavity 211 corresponding to the extrusion hole 110. A filter plate 220 positioned above the extrusion hole 110 is provided in the distribution cavity 211. The filter plate 220 is slidable along a central axis direction of the housing 200 for replacement.

Referring to FIGs. 1-2, in this embodiment, the housing 200 is provided with a sliding replacement channel 230 along a radial direction thereof, a plurality of filter plates 220 are slidably provided in the sliding replacement channel 230, and all of the filter plates 220 are positioned on a same horizontal plane. The adjacent filter plates 220 are connected to each other by a connector 240. The sliding replacement channel 230 includes a working segment 231 passing through the housing 200, a reserve segment 232 provided on one end of the working segment 231, and a disusing segment 233 provided on the other end of the working segment 231.

The end of the disusing segment 233 away from the working segment 233 in this embodiment is provided with an outlet port for pushing out a replaced filter plate 220. In other embodiments, two filter plates 220 can be arranged, one is used for filtering and the other is used for reserving in the reserve segment 232. When the filter plate 220 in the working segment 231 needs to be replaced, the whole filter plate 220 is slid, facilitating replacement, so that the used filter plate 220 can be taken out from the outlet port. The end of the sliding replacement channel 230 close to the reserve segment 232 can be provided with an inlet port, and the filter plates 220 can be introduced from the inlet port, realizing a continuous replacement. It should be noted that, the inlet port and the outlet port should both have corresponding sealing structures for retaining the inner pressure stability.

Referring to FIGs.5-6, the connector 240 includes a connecting rod 241, and an elastic plate 242 provided on each end of the connecting rod 241 and embedded in the filter plate 220. Each end of the filter plate 220 is provided with a connecting groove 243 for receiving the elastic plate 242. The elastic plate 242 is V-shaped. A connection point between the elastic plate 242 and the connecting rod 241 is positioned on the top of the V-shape. Two deformed ends of the elastic plate 242 face towards a direction perpendicular to a motion direction of the filter plate 220. When embedding in the connecting groove 243, the elastic plate 242 is folded and deformed, and the outward expansion trend makes the elastic plate 242 abut against an inner wall of the connecting groove 243. During the sliding process of the filter plate 220, the elastic plate 242 can drive the two filter plates 220 to move together.

The housing 200 positioned between the working segment 231 and the disusing segment 233 is provided with an accommodation groove 244 for accommodating the connector 240.The housing 200 is provided with a knocking member 250 for knocking the connector 240 into the accommodation groove 244. The knocking member 250 includes a knocking stick 251 slidably connected to the housing 200 along the central axis direction thereof and an elastic strip 252 provided in the housing 200 and connected to the knocking stick 251. In this embodiment, the elastic strip 252 adopts a knocking spring. There are two knocking springs, each knocking spring is connected to a sidewall of the knocking stick 251. A linkage wheel 260 for intermittently driving the knocking stick 251 away from the accommodation groove 244is provided in the housing 200.

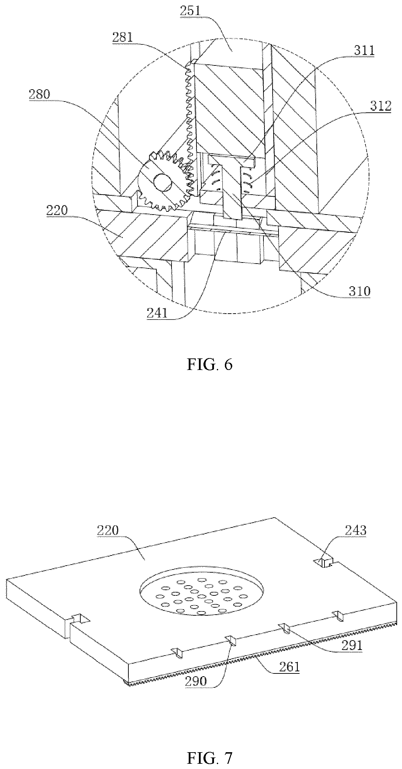

Referring to FIG.5 and FIG.7, a gear groove 261 is provided under the filter plate 220. A drive motor 270 is mounted under the sliding replacement channel 230, and a plurality of driving gears 271 for meshing with the gear grooves 261 are rotatably connected to the sliding replacement channel 230. The driving motor 270 drives the driving gears 271 to mesh with the gear grooves 261 when rotating in a manner of gears or a direct connection, thereby driving the filter plate 220 to slide.

Referring to FIGs.5-6, the linkage wheel 260 is rotatably connected to the housing 200, and the linkage wheel 260 is coaxially provided with an incomplete gear 280. Meanwhile, an outer wall of the knocking stick 251 is provided with a protruded teeth 281 along the central axis of the housing 200 for meshing with the incomplete gear 280.

Referring to FIG.5 and FIG.7, four linkage grooves 290 are provided on the top boundary of the filter plate 220 along a motion direction of the filter plate 220 in spacing. The linkage wheel 260 is rotatably connected to the hosing 200, and four linkage blocks 262 are evenly provided on an outer wall of the linkage wheel 260 along the circumference. One end of the linkage groove 290 is configured for accommodating the linkage block 262 with the rotation of the linkage wheel 260, and the other end has a vertical limiting surface 291 for abutting against the linkage block 262. When the filter plate 220 is moved, two linkage blocks 262 are in a splayed shape and abutted against the upper portion of the filter plate 220. With the motion of the filter plate 220, the two linkage blocks 262 is slid relative to the filter plate 220, until one of the linkage blocks 262 is embedded in the linkage groove 290 and passes through the vertical limiting surface 291, thereby driving the linkage wheel 260 to rotate by 90 °. When using the filter plates 220 with different dimensions, it is only ensured that four linkage grooves 290 are evenly distributed on the filter plate 220, to realize a linkage, which has a wide application range.

When the linkage wheel 260 is rotated, the incomplete gear 280 is rotated accordingly. The incomplete gear 280 will drive the knocking stick 251 to move away from the accommodation groove 244. However, when the four linkage wheels 260 all finish rotating, a part of the incomplete gear 280 with teeth is detached from the protruded teeth 281, and the knocking stick 251 will knock the side of the knocking stick 251 facing the connecting rod 241 at the same time. The housing 200 in this embodiment is provided with a knocking sliding path 300, and the knocking stick 251 is slidably connected in the knocking sliding path 300. A knocking nail 310 is slidably connected at a bottom of the knocking sliding path 300 along the central axis direction of the housing 200, one end of the knocking nail 310 is configured to knock the connecting rod 241, and the other end of the knocking nail 310 is provided with a limiting cap 311. A limiting spring 312 for retaining the height of the limiting cap 311 is provided between the limiting cap 311 and the bottom of the knocking sliding path 300. When the knocking stick 251 knocks the limiting cap 311, the knocking nail 310 knocks the connecting rod 241. The two limiting spring 312 remains a horizontal state when the knocking stick 251 knocks the limiting cap 311, so as to reduce a possibility of shaking back and forth.

When the connector 240 is disengaged, the disusing filter plate 220 can be taken out individually, so as to replace a new filter plate 220.

Based on the above spinneret assembly, the present application provides a preparation method of an ultra-high molecular weight polyethylene fiber, which includes the following process steps:
step S1: charging mixture, mixing raw materials according to proportions to obtain a spinning solution,
in which the spinning solution includes the raw materials with the following parts by weight:
   85-95 parts of the ultra-high molecular weight polyethylene powder, 1.7-9.5 parts of nano boron nitride, 9.5-35 parts of 35-40 wt% hydrogen fluoride solution, 5-15 parts of the solvent and 1-2.5 parts of tannic acid;
   step S2: spinning, in which the spinning solution obtained in step S1 is spun by adopting the above spinneret assembly to obtain a fluid filament;
   step S3: cooling, in which the fluid filament obtained in step S2 is cooled to obtain a gel filament; and
   step S4: extracting, in which the gel filament obtained in step S3 is extracted to obtain the ultra-high molecular weight polyethylene fiber.

### Examples of the ultra-high molecular weight polyethylene fiber and the preparation method thereof, the multifilament yarn

The related raw materials in the following examples were commercially available, if there were no special instructions.

### Example 1

The preparation method of the ultra-high molecular weight polyethylene fiber included the following process steps:
step S1: the mixture was charged, the raw materials were mixed according to proportions to obtain the spinning solution.

The raw materials for preparing the spinning solution included: 85 kg of the ultra-high molecular weight polyethylene powder, 1.7 kg of nano boron nitride, 9.5 kg of 40 wt% hydrogen fluoride solution, 5 kg of liquid paraffin and 1kg of tannic acid, in which the nano boron nitride had a particle size of 10-100 nm, and the ultra-high molecular weight polyethylene had an average molecular weight of 5000000g/mol.

A preparation method of the spinning solution was:
I. the ultra-high molecular weight polyethylene powder with above using amount and liquid paraffin with above using amount were mixed to obtain a mixed polyethylene solution;
   the nano boron nitride with above using amount and 40 wt% hydrogen fluoride solution with above using amount were mixed to obtain a nano boron nitride mixing solution;
II. the tannic acid with above using amount, all the mixed polyethylene solution and the nano boron nitride mixing solution prepared in step I were homogeneously mixed to obtain the spinning solution.

Step S2: the spinning was performed, the spinning solution obtained in step S1 was spun by adopting the above spinneret assembly, a temperature of the spinning solution was maintained at 200 °C, the polyethylene was in a melting state at this temperature; then a fluid filament was obtained, and the fluid filament was fixedly formed under 200 °C for 15 min.

Step S3: the cooling was performed, the fluid filament obtained in step S2 was placed in the cold water of 5 °C to be cooled, and a gel filament was obtained.

Step S4: the extracting was performed, the gel filament obtained in step S3 was extracted in dimethylbenzene to obtain the ultra-high molecular weight polyethylene fiber with a diameter of 0.1 mm.

A multifilament yarn was prepared by using the above ultra-high molecular weight polyethylene fiber. Specifically, the multifilament yarn contained 50 ultra-high molecular weight polyethylene fibers (the ultra-high molecular weight polyethylene fiber prepared in the present application was long and filiform).

### Example 2

The preparation method of the ultra-high molecular weight polyethylene fiber included the following process steps:
step S1: the mixture was charged, the raw materials were mixed according to proportions to obtain the spinning solution.

The raw materials for preparing the spinning solution included: 90 kg of the ultra-high molecular weight polyethylene powder, 5.3 kg of nano boron nitride, 28 kg of 40 wt% hydrogen fluoride solution, 12.5 kg of mineral oil and 2 kg of tannic acid, in which the nano boron nitride had a particle size of 10-100 nm.

A preparation method of the spinning solution was:
I. the ultra-high molecular weight polyethylene powder with above using amount and mineral oil with above using amount were mixed to obtain a mixed polyethylene solution;
   the nano boron nitride with above using amount and 40 wt% hydrogen fluoride solution with above using amount were mixed to obtain the nano boron nitride mixing solution;
II. the tannic acid, the mixed polyethylene solution and the nano boron nitride mixing solution with above using amount were homogeneously mixed to obtain the spinning solution.

Step S2: the spinning was performed, the spinning solution obtained in step S1 was spun by adopting the above spinneret assembly, the temperature of the spinning solution was maintained at 250 °C, the polyethylene was in the melting state at this temperature; then the fluid filament was obtained, and the fluid filament was fixedly formed under 250 °C for 10 min.

Step S3: the cooling was performed, the fluid filament obtained in step S2 was place in the cold water of 10 °C to be cooled, and the gel filament was obtained.

Step S4: the extracting was performed, the gel filament obtained in step S3 was extracted in the gasoline to obtain the ultra-high molecular weight polyethylene fiber with the diameter of 0.12 mm.

A multifilament yarn was prepared by using the above ultra-high molecular weight polyethylene fiber. Specifically, the multifilament yarn contained 100 ultra-high molecular weight polyethylene fibers (the ultra-high molecular weight polyethylene fiber prepared in the present application was long and filiform).

### Example 3

The preparation method of the ultra-high molecular weight polyethylene fiber included the following process steps:
step S1: the mixture was charged, the raw materials were mixed according to proportions to obtain the spinning solution.

The raw materials for preparing the spinning solution included: 95 kg of the ultra-high molecular weight polyethylene powder, 9.5 kg of nano boron nitride, 35 kg of 35 wt% hydrogen fluoride solution, 15 kg of tetrahydronaphthalene and 2.5 kg of tannic acid, in which the nano boron nitride had a particle size of 10-100 nm.

A preparation method of the spinning solution was:
I. the ultra-high molecular weight polyethylene powder with above using amount and tetrahydronaphthalene with above using amount were mixed to obtain a mixed polyethylene solution;
   the nano boron nitride with above using amount and 35 wt% hydrogen fluoride solution with above using amount were mixed to obtain the nano boron nitride mixing solution; and
II. the tannic acid, the mixed polyethylene solution and the nano boron nitride mixing solution with above using amount were homogeneously mixed to obtain the spinning solution.

Step S2: the spinning was performed, the spinning solution obtained in step S1 was spun by adopting the above spinneret assembly, the temperature of the spinning solution was maintained at 300 °C, the polyethylene was in the melting state at this temperature; then the fluid filament was obtained, and the fluid filament was fixedly formed under 300 °C for 5 min.

Step S3: the cooling was performed, the fluid filament obtained in step S2 was placed in the cold water of 15 °C to be cooled, and the gel filament was obtained.

Step S4: the extracting was performed, the gel filament obtained in step S3 was extracted in dimethylbenzene to obtain the ultra-high molecular weight polyethylene fiber with the diameter of 0.15 mm.

A multifilament yarn was prepared by using the above ultra-high molecular weight polyethylene fiber. Specifically, the multifilament yarn contained 200 ultra-high molecular weight polyethylene fibers (the ultra-high molecular weight polyethylene fiber prepared in the present application was long and filiform).

### Comparative example 1

The preparation method of the ultra-high molecular weight polyethylene fiber included the following process steps:
step S1: the mixture was charged, the raw materials were mixed according to proportions to obtain the spinning solution.

The raw materials for preparing the spinning solution included: 90 kg of the ultra-high molecular weight polyethylene powder and 12.5 kg of mineral oil, in which the nano boron nitride had a particle size of 10-100 nm.

The preparation method of the spinning solution was: the ultra-high molecular weight polyethylene powder with above using amount and mineral oil with above using amount were mixed to obtain the mixed polyethylene solution.

Step S2: the spinning was performed, the spinning solution obtained in step S1 was spun by adopting the above spinneret assembly, the temperature of the spinning solution was maintained at 250 °C, the polyethylene was in the melting state at this temperature; then the fluid filament was obtained, and the fluid filament was fixedly formed under 250 °C for 10 min.

Step S3: the cooling was performed, the fluid filament obtained in step S2 was place in the cold water of 10 °C to be cooled, and the gel filament was obtained.

Step S4: the extracting was performed, the gel filament obtained in step S3 was extracted in the gasoline to obtain the ultra-high molecular weight polyethylene fiber with the diameter of 0.12 mm.

A multifilament yarn was prepared by using the above ultra-high molecular weight polyethylene fiber. Specifically, the multifilament yarn contained 100 ultra-high molecular weight polyethylene fibers (the ultra-high molecular weight polyethylene fiber prepared in the present application was long and filiform).

### Comparative example 2

The preparation method of ultra-high molecular weight polyethylene fiber included the following process steps:
S1: the mixture was charged, the raw materials were mixed according to proportions to obtain the spinning solution.

The raw materials for preparing the spinning solution included: 90 kg of the ultra-high molecular weight polyethylene powder, 5.3 kg of nano boron nitride, 28 kg of 40 wt% hydrogen fluoride solution and 12.5 kg of the mineral oil, in which the nano boron nitride had a particle size of 10-100 nm.

The preparation method of the spinning solution was:
I. the ultra-high molecular weight polyethylene powder with above using amount and the mineral oil with above using amount were mixed to obtain the mixed polyethylene solution;
   the nano boron nitride with above using amount and 40 wt% hydrogen fluoride solution with above using amount were mixed to obtain the nano boron nitride mixing solution;
II. all the mixed polyethylene solution prepared in step S1 and the nano boron nitride mixing solution were homogeneously mixed to obtain the spinning solution.

Step S2: the spinning was performed, the spinning solution obtained in step S1 was spun by adopting the above spinneret assembly, the temperature of the spinning solution was maintained at 250 °C, the polyethylene was in the melting state at this temperature; then the fluid filament was obtained, and the fluid filament was fixedly formed under 250 °C for 10 min.

Step S3: the cooling was performed, the fluid yarn obtained in step S2 was placed in the cold water of 10 °C to be cooled, and the gel filament was obtained.

Step S4: the extracting was performed, the gel filament obtained in step S3 was extracted in the gasoline to obtain the ultra-high molecular weight polyethylene fiber with the diameter of 0.12 mm.

A multifilament yarn was prepared by using the above ultra-high molecular weight polyethylene fiber. Specifically, the multifilament yarn contained 100 ultra-high molecular weight polyethylene fibers (the ultra-high molecular weight polyethylene fiber prepared in the present application was long and filiform)

Tests of the breaking strength, elastic modulus and elongation rate after breaking of the examples and comparative examples were conducted, and detail results can be seen in table 1.

**Table 1: Performances of the ultra-high molecular weight polyethylene fiber obtained in different embodiments**

| Embodiments | Breaking strength (GPa) | Elastic modulus (GPa) | Elongation rate after breaking (%) |
|---|---|---|---|
| Example 1 | 3.47 | 133.63 | 3.8 |
| Example 2 | 3.62 | 135.41 | 3.2 |
| Example 3 | 3.56 | 130.49 | 3.5 |
| Comparative example 1 | 2.43 | 125.32 | 5.4 |
| Comparative example 2 | 2.98 | 128.16 | 4.6 |

It can be seen that from the results in Table 1, the ultra-high molecular weight polyethylene fiber prepared in the present application had the excellent breaking strength and elastic modulus. By modifying the ultra-high molecular weight polyethylene fiber by the nano boron nitride, the ultra-high molecular weight polyethylene fiber with the excellent mechanical performances can be obtained.

The above are the preferred embodiments of the present application, which are not intended to limit the protection scope of the present application. Therefore, all equivalent changes made according to the structure, shape and principle of the present application should be covered within the protection scope of the present application.

### List of references:

100 plate body,
110 extrusion hole,
111 pressurized inlet segment,
112 outlet segment,
200 housing,
210 distribution block,
211 distribution cavity,
220 filter plate,
230 sliding replacement channel,
231 working segment,
232. reserve segment,
233. disusing segment,
240. connector,
241 connecting rod,
242 elastic plate,
243 connecting groove,
244 accommodation groove,
250 knocking member,
251 knocking stick,
252 elastic strip,
260 linkage wheel,
261 gear groove,
262. linkage block,
270. driving motor,
271 driving gear,
280 incomplete gear,
281 protruded tooth,
290. linkage groove,
291 vertical limiting surface,
300 knocking sliding path,
310. knocking nail,
311 limiting cap,
312. limiting spring.

## Claims

1. A spinneret assembly comprising a housing (200), **characterized in** further comprising a plate body (100) and an extrusion hole (110) provided in the plate body (100), wherein the extrusion hole (110) comprises a pressurized inlet segment (111) and an outlet segment (112) connected to an end of the pressurized inlet segment (111); an inner diameter of the pressurized inlet segment (111) is gradually decreased from a first end away from the outlet segment (112) to a second end of the pressurized inlet segment (111), and an inner diameter of the outlet segment (112) is constant.

2. The spinneret assembly according to claim 1, **characterized in that**, the housing (200) is provided with a distribution block (210), the distribution block (210) is provided with a distribution cavity (211) corresponding to the extrusion hole (110), a filter plate (220) positioned above of the extrusion hole (110) is provided in the distribution cavity (211), and the filter plate (220) is slidable along a direction perpendicular to a central axis of the housing (200) for replacement.

3. The spinneret assembly according to claim 1, **characterized in that**, the housing (200) has a sliding replacement channel (230) along a radial direction, the sliding replacement channel (230) is provided with a plurality of filter plates (220) , the adjacent filter plates (220) of the plurality of filter plates (220) are connected to each other by a connector (240); the sliding replacement channel (230) comprises a working segment (231) passing through the housing (200), a reserve segment (232) provided on a first end of the working segment (231), a disusing segment (233) provided on a second end of the working segment (231), and an end of the disusing segment (233) away from the working segment (231) is provided with an outlet port.

4. The spinneret assembly according to claim 3, **characterized in that**, the connector (240) comprises a connecting rod (241), and an elastic plate (242) provided on each end of the connecting rod (241) and embedded in each of the plurality of the filter plates (220); each end of the plurality of filter plates (220) is provided with a connecting groove (243) for accommodating the elastic plate (242), and the elastic plate (242) has a V-shape; two deformed ends of the elastic plate (242) face towards a direction perpendicular to a motion direction of the filter plate (220); the housing (220) positioned between the working segment (231) and the disusing segment (233) is provided with an accommodation groove (244) for accommodating the connector (240), and the housing (200) is provided with a knocking member (250) for knocking the connector (240) into the accommodation groove (244).

5. The spinneret assembly according to claim 4, **characterized in that**, the knocking member (250) comprises a knocking stick (251) slidably connected to the housing (200) along the central axis direction of the housing (200) and an elastic strip (252) provided in the housing (200) and connected to the knocking stick (251); a linkage wheel (260) for intermittently driving the knocking stick (251) away from the accommodation groove (244) is provided in the housing (200) .

6. A preparation method of an ultra-high molecular weight polyethylene fiber comprising the following process steps:
step S1, preparing a spinning solution, wherein the spinning solution comprises the raw materials with the following parts by weight:
85-95 parts of an ultra-high molecular weight polyethylene powder, 1.7-9.5 parts of nano boron nitride, 9.5-35 parts of 35-40 wt% hydrogen fluoride solution, 5-15 parts of a solvent and 1-2.5 parts of tannic acid;
step S2, spinning, wherein the spinning solution obtained in step S1 is spun by adopting the spinneret assembly according to any of claims 1-5 to obtain a fluid filament;
step S3, cooling, wherein the fluid filament obtained in step S2 is cooled to obtain a gel filament; and
step S4, extracting, wherein the gel filament obtained in step S3 is extracted to obtain the ultra-high molecular weight polyethylene fiber.

7. The preparation method of an ultra-high molecular weight polyethylene fiber according to claim 6, **characterized in that** the spinning solution is prepared by adopting a method comprising the following steps:
I. mixing the ultra-high molecular weight polyethylene powder and the solvent to obtain a mixed polyethylene solution;
mixing the nano boron nitride and 35-40 wt% hydrogen fluoride solution to obtain a nano boron nitride mixing solution; and
II. mixing the tannic acid, the mixed polyethylene solution and the nano boron nitride mixing solution to obtain the spinning solution.

8. The preparation method of an ultra-high molecular weight polyethylene fiber according to claim 6, **characterized in that**, when spinning in step S2, a spinning temperature is 200-300 °C, and the fluid filament is placed in an environment of 200-300 °C for 5-15 min; and when cooling in step S3, a cooling temperature is 5-15 °C.

9. The preparation method of an ultra-high molecular weight polyethylene fiber according to claim 7, **characterized in that**, the solvent is one or more selected from halogenated hydrocarbon, mineral oil, liquid paraffin, decahydronaphthalene, tetrahydronaphthalenes, naphthalene, dimethylbenzene, toluene, dodecane, undecane, decane, n-nonane, octene, cis-decahydronaphthalene, trans-decahydronaphthalene and low molecular weight polyethylene wax, and an extractant is one or two selected from dimethylbenzene and gasoline when extracting in step S3.

10. The preparation method of an ultra-high molecular weight polyethylene fiber according to claim 6, **characterized in that**, the spinning solution in step S1 has an intrinsic viscosity of at least 4 dL/g.

11. The preparation method of an ultra-high molecular weight polyethylene fiber according to claim 10, **characterized in that**, the ultra-high molecular weight polyethylene fiber obtained in step S4 has a tensile strength greater than or equal to 3.0 GPa, and a tensile modulus greater than or equal to 100.0 GPa.

12. A multifilament yarn, **characterized in that**, the multifilament yarn is made of an ultra-high molecular weight polyethylene fiber, and the ultra-high molecular weight polyethylene fiber is prepared by the preparation method according to any of claims 6-11.
